(19) Europäisches Patentamt
European Patent Office
Office européen des brevets

(11) **EP 4 244 660 B1**

(12) **EUROPEAN PATENT SPECIFICATION**

(45) Date of publication and mention
of the grant of the patent:
**06.05.2026 Bulletin 2026/19**

(21) Application number: **21893070.9**

(22) Date of filing: **10.11.2021**

(51) International Patent Classification (IPC):
**G01V 3/12** (2006.01)    **G01V 3/30** (2006.01)
**G01V 3/38** (2006.01)    **E21B 47/13** (2012.01)
**G01V 3/26** (2006.01)    **G01V 3/28** (2006.01)

(52) Cooperative Patent Classification (CPC):
**G01V 3/30; G01V 3/26; G01V 3/28**

(86) International application number:
**PCT/US2021/072332**

(87) International publication number:
**WO 2022/104342 (19.05.2022 Gazette 2022/20)**

(54) **METHOD FOR MAKING DIRECTIONAL RESISTIVITY MEASUREMENTS OF A SUBTERRANEAN FORMATION**

VERFAHREN ZUR DURCHFÜHRUNG VON DIREKTIONALEN WIDERSTANDSMESSUNGEN EINER UNTERIRDISCHEN FORMATION

PROCÉDÉ DE RÉALISATION DE MESURES DE RÉSISTIVITÉ DIRECTIONNELLE D'UNE FORMATION SOUTERRAINE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **13.11.2020 US 202063198788 P**

(43) Date of publication of application:
**20.09.2023 Bulletin 2023/38**

(73) Proprietors:
• **Services Pétroliers Schlumberger**
**75007 Paris (FR)**
Designated Contracting States:
**FR**
• **Schlumberger Technology B.V.**
**2514 JG The Hague (NL)**
Designated Contracting States:
**AL AT BE BG CH CY CZ DE DK EE ES FI GB GR HR HU IE IS IT LI LT LU LV MC MK MT NL NO PL PT RO RS SE SI SK SM TR**

(72) Inventors:
• **SUN, Keli**
**Sugar Land, Texas 77478 (US)**
• **ZHONG, Xiaoyan**
**Sugar Land, Texas 77478 (US)**
• **MIRTO, Ettore**
**Sugar Land, Texas 77478 (US)**
• **TAN, Kong Hauw Sarwa Bakti**
**Sugar Land, Texas 77478 (US)**

(74) Representative: **Schlumberger Intellectual Property Department**
**Parkstraat 83**
**2514 JG Den Haag (NL)**

(56) References cited:
WO-A1-2009/091408    US-A1- 2005 024 060
US-A1- 2005 218 898    US-A1- 2015 276 972
US-A1- 2015 309 201    US-A1- 2016 370 490
US-A1- 2017 306 701    US-A1- 2018 003 853
US-A1- 2019 128 116

**Description**

BACKGROUND INFORMATION

Electromagnetic measurements, such as logging while drilling (LWD) and wireline logging measurements, may be utilized to determine a subterranean formation resistivity, which, along with formation porosity measurements, can be used to indicate the presence of hydrocarbons in a subterranean formation. Moreover, azimuthally sensitive directional resistivity measurements may be employed, for example, in pay-zone steering applications, to provide information upon which steering decisions may be made.

Symmetrized directional resistivity measurements have been used to evaluate formation resistivity in the region above and bellows formation boundaries. The sign (positive or negative) of the symmetrized measurement indicates whether the formation above the logging tool is more or less resistive than the formation below the logging tool.

While symmetrized measurements have been used in geosteering applications, their interpretation may not be intuitive and may commonly require expert analysis.

US 2018/003853 A1 discloses a method to obtain multi-component signal measurements from an electromagnetic logging tool conveyed along a borehole through a formation, and invert the measurements for a single frequency using an anisotropic formation model having at least dip, horizontal and vertical resistivity, and horizontal and vertical permittivity, as parameters.

SUMMARY

A method for making electromagnetic directional resistivity measurements of a subterranean formation is disclosed. The method includes rotating an electromagnetic logging tool in a subterranean wellbore penetrating the formation. The logging tool includes a transmitting antenna and a receiving antenna spaced along a tool body with at least one of the transmitting antenna and the receiving antenna being a tilted antenna. The electromagnetic logging tool is used to make a plurality of electromagnetic measurements at a corresponding plurality of frequencies while rotating in the wellbore. The plurality of measurements made at the corresponding plurality of frequencies is processed to compute a combined apparent resistivity of the subterranean formation. The processing includes minimizing a difference between a plurality of modeled measurements and the plurality of wellbore measurements in which the modeled measurements are computed using a model assuming a homogenous formation.

This summary is provided to introduce a selection of concepts that are further described below in the detailed description. This summary is not intended to identify key or essential features of the claimed subject matter, nor is it intended to be used as an aid in limiting the scope of the claimed subject matter.

BRIEF DESCRIPTION OF THE DRAWINGS

For a more complete understanding of the disclosed subject matter, and advantages thereof, reference is now made to the following descriptions taken in conjunction with the accompanying drawings, in which:

FIG. 1 depicts an example drilling rig on which disclosed embodiments may be utilized.
FIG. 2 depicts one example embodiment of the electromagnetic directional resistivity logging tool depicted on FIG. 1.
FIGS. 3A-3F (collectively FIG. 3) depict coupled transceiver (coupled transmitter and receiver) arrangements suitable for making directional electromagnetic logging measurements for the disclosed method embodiments.
FIG. 4 depicts a flow chart of one disclosed method embodiment.
FIGS. 5A and 5B depict attenuation $AD$ (5A) and phase shift $PS$ (5B) as a function of the resistivity of a formation.
FIGS. 6A and 6B depict an example implementation with FIG 6A depicting a 16 bin (sector) resistivity image showing apparent resistivity values in pseudo-color versus azimuth angle and total vertical depth of the well and FIG. 6B depicting a plot of $Rapp_{top}$, $Rapp_{bottom}$, $Rapp_{up}$, and $Rapp_{down}$ versus vertical depth of the well.

DETAILED DESCRIPTION

Disclosed embodiments relate generally to electromagnetic wellbore logging measurements and more particularly to a method for making directional resistivity measurements of a subterranean formation at multiple frequencies. This Application recognizes a need in the industry for a simpler and more intuitive measurement for use in geosteering applications.

A method for making electromagnetic directional resistivity measurements of a subterranean formation is disclosed. The method includes rotating an electromagnetic logging tool in a subterranean wellbore penetrating the formation. The logging tool includes a transmitting antenna and a receiving antenna spaced along a tool body with at least one of the transmitting antenna and the receiving antenna being a tilted antenna. The electromagnetic logging tool is used to make a plurality of electromagnetic measurements at a corresponding plurality of frequencies while rotating in the wellbore. The plurality of measurements made at the corresponding plurality of frequencies is processed to compute a combined apparent resistivity of the subterranean formation. The processing includes minimizing a difference between a plurality of modeled measurements and the plurality of wellbore measurements in which the modeled measurements are computed using a model assuming a homogenous formation.

The disclosed method(s) may advantageously provide for improved methods for making directional resistivity measurements and directional resistivity imaging without the use of computationally expensive inversion algorithms. Formation resistivity values and/or images may be readily computed using low power downhole processors deployed in the logging tool. The directional resistivity measurements and/or the resulting resistivity images may be used for making timely (quick) operational decisions such as maintain/adjusting drilling directions in a geosteering operation.

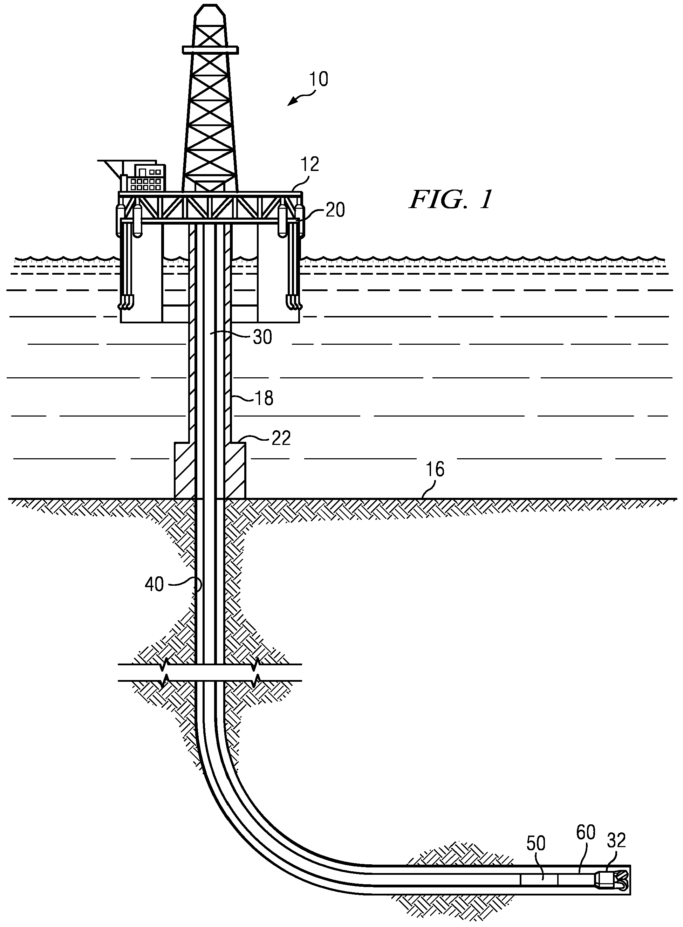

FIG. 1 depicts an example drilling rig 10 suitable for employing various method embodiments disclosed herein. A semisubmersible drilling platform 12 is positioned over an oil or gas formation (not shown) disposed below the sea floor 16. A subsea conduit 18 extends from deck 20 of platform 12 to a wellhead installation 22. The platform may include a derrick and a hoisting apparatus for raising and lowering a drill string 30, which, as shown, extends into borehole 40 and includes a drill bit 32 deployed at the lower end of a bottom hole assembly (BHA). The BHA includes an electromagnetic directional resistivity logging tool 50 including multiple transmitters and receivers configured to make downhole electromagnetic logging measurements.

The deployment illustrated on FIG. 1 is merely an example. Drill string 30 may include substantially any suitable downhole tool components, for example, including a steering tool such as a rotary steerable tool, a downhole telemetry system, and one or more additional MWD and/or LWD tools including various sensors for sensing downhole characteristics of the borehole and the surrounding formation. The disclosed embodiments are by no means limited to any particular drill string and/or BHA configuration. Similarly, the disclosed embodiments are not limited to use with a semisubmersible platform 12 as illustrated on FIG. 1. The disclosed embodiments are equally well suited for use with either onshore or offshore subterranean operations.

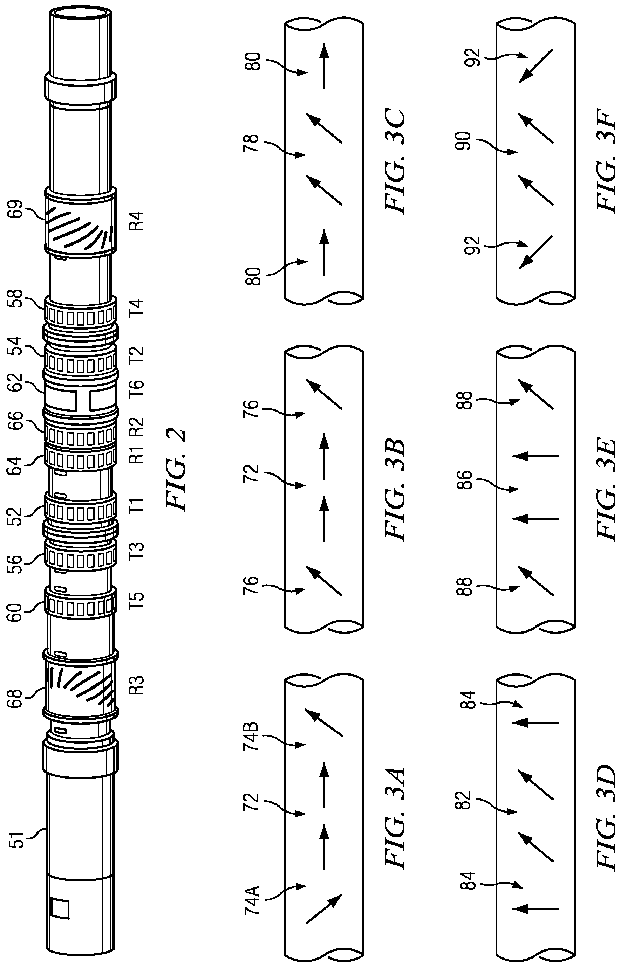

FIG. 2 depicts one example embodiment of the electromagnetic directional resistivity logging tool 50 depicted on FIG. 1. The tool 50 may include, for example, a multi-spacing directional electromagnetic propagation tool. As described in more detail below, the tool 50 is configured to make electromagnetic logging measurements at multiple frequencies (such as at 100 kHz, 400 kHz, and 2 MHz). As such it will be understood that the tool includes transceiver (transmitter and receiver) electronics capable of transmitting and receiving electromagnetic radiation at each of the multiple frequencies (or multi-frequency signals including components of each of the frequencies).

In the depicted embodiment, the logging tool 50 includes multiple transmitters TI, T2, T3, T4, T5, and T6 depicted at 52, 54, 56, 58, 60, and 62 and multiple receivers RI, R2, R3, and R4 depicted at 64, 66, 68, and 69 spaced axially along a logging tool body 51 (e.g., a logging while drilling tool body). As depicted, logging tool 50 includes axial, transverse, and tilted antennas. As used herein, an axial antenna is one whose dipole moment is substantially parallel with the longitudinal axis of the tool. Axial antennas are commonly wound about the circumference of the logging tool such that the plane of the antenna is orthogonal to the tool axis. Axial antennas produce a radiation pattern that is substantially equivalent to a dipole along the axis of the tool (by convention the z-direction). Electromagnetic measurements made by axially oriented transmitting and receiving antennas are sometimes referred to as conventional or non-directional measurements.

A transverse antenna is one whose dipole moment is substantially perpendicular to the longitudinal axis of the tool, for example. A transverse antenna may include a saddle coil (e.g., as disclosed in commonly owned U.S. Patent Publications 2011/0074427 and 2011/0238312) and generates a radiation pattern that is substantially equivalent to a dipole that is perpendicular to the axis of the tool (by convention the x or y direction).

A tilted antenna is one whose dipole moment is neither parallel nor perpendicular to the longitudinal axis of the tool. Tilted antennas generate a mixed mode radiation pattern (i.e., a radiation pattern in which the dipole moment is neither parallel nor perpendicular with the tool axis). Electromagnetic measurements made by transverse or tilted antennas are commonly referred to as directional measurements.

In the particular, non-limiting tool embodiment depicted in FIG. 2, five of the transmitter antennas (TI, T2, T3, T4, and T5) are axial antennas spaced along the axis of the tool. A sixth transmitter antenna (T6) is a transverse antenna. First and second receivers (RI and R2) located axially between the transmitters are axial antennas and may be used to obtain conventional non-directional type propagation resistivity measurements (when used in combination with the axial antennas TI, T2, T3, T4, and/or T5). Third and fourth receivers (R3 and R4) are tilted antennas located axially about the transmitters. Such a directional arrangement (including tilted and/or transverse antennas) may produce a preferential sensitivity on one azimuthal side of the tool 50 that better enables bed boundaries and other features of the subterranean formations to be identified and located.

The particular, non-limiting tool embodiment 50 depicted on FIG. 2 provides axial transmitters and axial receiver pairs and is therefore capable of making non-directional electromagnetic measurements. The depicted embodiment further includes axial transmitter and tilted receiver pairs as well as transverse transmitter and both axial and tilted receiver pairs and is therefore also capable of making various directional electromagnetic measurements. A commercial logging tool similar to that depicted in FIG. 2 is a tool available under the name PERISCOPE® from Schlumberger Technology Corporation of Sugar Land, Texas.

The disclosed embodiments are in no way limited to the particular electromagnetic logging tool configuration depicted on FIG. 2. Logging tool 50 is merely one example of a suitable electromagnetic logging tool. Moreover, any logging tool wherein at least one of the transmitting antenna and the receiving antenna is a tilted antenna, and therefore capable of making directional electromagnetic logging measurements may be used. For example, a suitable logging tool may include an axial and/or transverse transmitter and a tilted receiver. A suitable logging tool may additionally and/or alternatively include a tilted transmitter and an axial and/or transverse receiver. Moreover, a suitable logging tool may include a tilted receiver and a tilted transmitter (in which the tilt angle of the transmitter is different than the tilt angle of the receiver). The disclosed embodiments are not limited in these regards.

FIGS. 3A-3F (collectively FIG. 3) depict non-limiting coupled transceiver (coupled transmitter and receiver) arrangements suitable for making directional electromagnetic logging measurements for the disclosed method embodiments. The embodiments depicted on FIG. 3 may be advantageously utilized to make compensated measurements in which transmitter and receiver gains are cancelled (as described in more detail below). In each of these configurations, the transceiver dipole moment is depicted as an arrow (pointing along the axis of the tool body for axial transceivers, perpendicular to the tool body for transverse transceivers, and angled with respect to the tool body for tilted transceivers).

In FIG. 3A, an example electromagnetic logging tool includes a pair of axial transmitters 72 deployed between a pair of tilted receivers 74A and 74B. The embodiment depicted on FIG. 3A is identical to that depicted on FIG. 2 in which axial transmitters T4 and T5 are deployed between tilted receivers R3 and R4. In FIG. 3B an example electromagnetic logging tool includes a pair of axial transmitters 72 deployed between a pair of tilted receivers 76 (note in FIG. 3B the receivers are tilted at the same angle while in FIG. 3A the receiver tilt angles are offset by 90 degrees). In FIG. 3C an example electromagnetic logging tool includes a pair of tilted transmitters 78 deployed between a pair of axial receivers 80. In FIG. 3D an example electromagnetic logging tool includes a pair of tilted transmitters 82 deployed between a pair of transverse receivers 84. In FIG. 3E an example electromagnetic logging tool includes a pair of transverse transmitters 86 deployed between a pair of tilted receivers 88. In FIG. 3F an example electromagnetic logging tool includes a pair of tilted transmitters 90 deployed between a pair of tilted receivers 92 (having a different tilt angle).

Again, it will be understood that the disclosed embodiments are not limited to the transceiver embodiments depicted on FIGS. 2 and 3. Moreover, it will be understood that the pair of transmitters need not be deployed between the pair of receivers. It will be understood that based on the principle of reciprocity, that the pair of receivers may be equivalently deployed between the pair of transmitters. It will further be understood that first and second tilted transmitters or tilted receivers need not have the same tilt angle but may have different tilt angles (e.g., as in FIG. 3A).

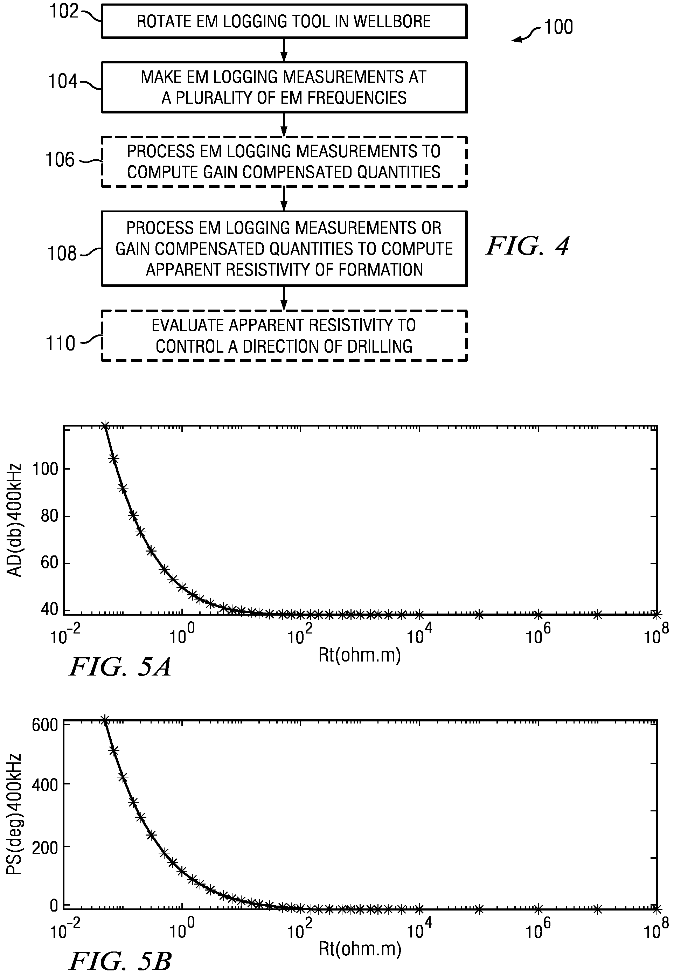

FIG. 4 depicts a flow chart of one disclosed method embodiment 100. An electromagnetic (EM) logging tool including at least one tilted transceiver (such as tool 50 shown on FIG. 2) is rotated in a wellbore penetrating a subterranean formation at 102. The tool is used to make electromagnetic logging measurements at a plurality of frequencies (e.g., at 100 kHz, 400 kHz, and 2 MHz) at 104 (while rotating in the wellbore). As described in more detail below, electromagnetic logging measurements may be made by transmitting an electromagnetic signal into the wellbore using a transmitting antenna and receiving the signal (e.g., a complex voltage response) using a receiving antenna.

The measurements may be made sequentially, for example, at a first frequency, then at a second frequency, then at a third frequency, and so on. The measurements may also be made simultaneously, for example, via transmitting and receiving an electromagnetic wave having multiple frequency components (e.g., a single wave including 100 kHz, 400 kHz, and 2 MHz components).

With continued reference to FIG. 4, in some embodiments, method 100 may further include pre-processing the electromagnetic measurements, for example, to compute a gain compensated measurement quantity at 106, though in some embodiments, pre-processing is not performed. Suitable gain compensated measurement quantities are disclosed, for example, in commonly assigned U.S. Patents 9,423,525 and 9,835,755. In one particular embodiment, a gain compensated measurement quantity may be computed for the electromagnetic measurements made at each of the plurality of measurement frequencies (e.g., a first gain compensated measurement quantity at 100 kHz, a second at 400 kHz, and a third at 2 MHz).

At 108 the plurality of electromagnetic measurements made in 104 (at the corresponding plurality of frequencies) or the plurality of gain compensated measurement quantities computed in 106 (at the corresponding plurality of frequencies) are processed to compute a combined apparent resistivity of the subterranean formation. As used herein, combined apparent resistivity means that the computed apparent resistivity is obtained from a combination of the multiple electromagnetic measurements made at the corresponding multiple (plurality) frequencies. As described in more detail below, the disclosed processing includes minimizing a difference between a plurality of modeled measurements (wherein the modeled measurements are computed using a model assuming a homogeneous formation) and the plurality of measurements made in 104 or the plurality of compensated quantities computed in 106.

With further reference to FIG. 4, in some embodiments, method 100 may further include processing (or evaluating) 110 the apparent resistivity (or apparent resistivities) computed in 108 to control a direction of drilling (e.g., to determine and execute a new direction of drilling or to determine and execute a change in a current direction of drilling), though in some embodiments, such further processing may not occur. Such control of the direction of drilling may be executed, for example, using a steering tool such as a rotary steerable tool and may include turning the direction of drilling towards or away from a formation boundary.

One example embodiment of method 100 is now described in more detail with respect to FIGS. 2-4. The electromagnetic measurements are described with respect to the logging tool and antenna configuration shown on FIGS. 2 and 3A. The disclosed embodiments are of course not limited in this regard to the particular details that follow. As is known to those of ordinary skill in the art, electromagnetic logging measurements are made via electromagnetically coupling corresponding transmitting and receiving antennas (e.g., transmitting antennas T4 or T5 with receiving antennas R3 or R4 in FIG. 2).

As is known to those of ordinary skill in the art, the antenna coupling may be accomplished by applying a time varying electrical current (an alternating current) in the transmitting antenna to transmit electromagnetic energy into the surrounding environment (including the formation). This transmitted energy generates a corresponding time varying magnetic field in the local environment (e.g., the tool collar, borehole fluid, and the formation). The magnetic field in turn induces electrical currents (eddy currents) in the conductive formation. These eddy currents further produce secondary magnetic fields which may produce a voltage response in a receiving antenna (the electromagnetic energy is received, for example, via measuring the complex voltage in the receiving antenna).

The electromagnetic measurements are made while the tool rotates in the wellbore (e.g., while drilling the wellbore) such that the measured voltages may be a function of the toolface angle of the logging tool in the wellbore. With reference to FIGS. 2 and 3A these voltages measurements may be represented, for example, as follows: $T4R3(\phi)$, $T4R4(\phi)$, $T5R3(\phi)$, and $T5R4(\phi)$ where $T4$ and $T5$ represent the first and second axial transmitters shown on FIG. 3A, $R3$ and $R4$ represent the first and second tilted receivers shown on FIG. 3A, and $\phi$ represents the tool face angle. Fourier fitting coefficients may be computed for each transmitter receiver pair $TiRj$, for example, based on the following expression:

$$V_{ij}(\phi) = V_{DC\_ij} + V_{FHC\_ij}\cos(\phi) + V_{FHS\_ij}\sin(\phi) + V_{SHC\_ij}\cos(2\phi) + V_{SHS\_ij}\sin(2\phi) \quad (1)$$

where $V_{ij}(\phi)$ represent the measured voltages as the tool rotates, $V_{DC\_ij}$ represents a DC voltage coefficient, $V_{FHC\_ij}$ and $V_{FHS\_ij}$ represent first order harmonic cosine and first order harmonic sine voltage coefficients, and $V_{SHC\_ij}$ and $V_{SHS\_ij}$ represent second order harmonic cosine and second order harmonic sine voltage coefficients of the $ij$ transmitter receiver couplings (e.g., as depicted on FIGS 2 and 3).

Some electromagnetic measurements, for example, those made using axial and tilted antennas, may be advantageously fit using DC and first order coefficients. Others, for example, those made using transverse and tilted antennas, may be fit using DC, first order, and second order coefficients.

With continued reference to FIGS. 2-4, a gain compensated measurement quantity may be computed, for example, based on the $T4R3(\phi)$, $T4R4(\phi)$, $T5R3(\phi)$, and $T5R4(\phi)$ antenna couplings, as follows:

$$f(\phi) = \left(\frac{T4R3(\phi)}{T5R3(\phi)}\right)^{1/2}\left(\frac{T5R4(\phi)}{T4R4(\phi)}\right)^{1/2} \quad (2)$$

where $f(\phi)$ represents the gain compensated measurement. The $T4$ and $T5$ transmitters and the $R3$ and $R4$ receivers appear in both the numerator and denominator of Equation 2 such that their respective electronic gains cancel. The resulting measurement quantity therefore tends to be essentially free of electronic gain contributions and is said to be gain compensated.

Voltage measurements $T4R3(\phi)$, $T4R4(\phi)$, $T5R3(\phi)$, and $T5R4(\phi)$ are complex functions such that $f(\phi)$ in Equation 2 is also a complex function including both attenuation and phase shift information. The attenuation and phase of $f(\phi)$ may be expressed mathematically, for example, as follows:

$$AD = -20\log\left(|f(\phi)|\right)$$

$$PS = \frac{-180}{\pi}\text{angle}\left(f(\phi)\right)$$

where $AD$ and $PS$ represent the attenuation and phase shift of $f(\phi)$.

When the logging tool (e.g., logging tool 50 in FIG. 2) is deployed in a homogeneous, isotropic formation, the

voltage measurements $T4R3(\phi)$, $T4R4(\phi)$, $T5R3(\phi)$, and $T5R4(\phi)$ are independent of $\phi$. FIGS. 5A and 5B depict attenuation $AD$ and phase shift $PS$ as a function of the resistivity of the formation $Rt$. Both the attenuation and phase shift increase monotonically with decreasing resistivity. This may be represented mathematically, for example, as described below.

For a given series of formation resistivity values $Rt_i$, $i = 1,2, ..., N$ corresponding logging tool responses may be computed as follows:

$$resp_i = \text{fun}(Rt_i), \quad i = 1,2, ..., N \tag{3}$$

where $resp_i$ represent the tool responses, for example, including attenuation and phase shift responses as given above and shown on FIGS. 5A and 5B and fun($\cdot$) indicates that the tool response is a function of the formation resistivity. Equation 3 can be expressed as an inverse relation as follows:

$$Rt_i = \text{fun}^{-1}(resp_i), \quad i = 1,2, ..., N \tag{4}$$

Equation 4 may be used as a resistivity transform, particularly in a monotonic region of fun($\cdot$), such that an apparent resistivity may be obtained or computed from an electromagnetic measurement (the tool response). The apparent resistivity may be obtained using substantially any suitable techniques, for example, via mathematical inversion techniques, a look-up table, or interpolation.

In the disclosed embodiments, the electromagnetic logging measurements are made (e.g., at 104 of FIG. 4) while the tool rotates in the wellbore (e.g., while drilling). The apparent resistivity may be computed as a function of the toolface angle $\phi$, for example, as follows:

$$Rt(\phi) = \text{fun}^{-1}(resp(\phi)) \tag{5}$$

Certain particular toolface angles may be commonly of interest. For example, the resistivity at the top and bottom of the hole may be given as $Rt_{top}$ = fun⁻¹($resp(\phi = 0°)$) and $Rt_{bottom}$ = fun⁻¹($resp(\phi = 180°)$). For a layered formation, the bedding azimuth angle may also be computed from directional resistivity measurements. Up and down resistivity values are also commonly defined based on the bedding azimuth angle (DANG) as $Rt_{up}$ = fun⁻¹($resp(\phi = DANG)$) and $Rt_{down}$ = fun⁻¹($resp(\phi = DANG + 180°)$).

In the disclosed embodiments, the electromagnetic logging measurements are made at a plurality of frequencies at 104 (e.g., first, second, and third distinct frequencies). With continued reference to the tool embodiments depicted in FIGS. 2 and 3A, these measurements may be represented, for example, as follows: $T4R3(\phi, f_i)$, $T4R4(\phi, f_i)$, $T5R3(\phi, f_i)$, and $T5R4(\phi, f_i)$ where $T4$ and $T5$ represent the first and second axial transmitters shown on FIG. 3A, $R3$ and $R4$ represent the first and second tilted receivers shown on FIG. 3A, $\phi$ represents the toolface angle, and $f_i$ represent the measurement frequencies with $i = 1,2, ..., N_f$.

In some embodiments, in which gain compensated measurement quantities are computed at 106, the gain compensated measurement quantities may be given as follows:

$$g_d^{fi}(\phi) = \left(\frac{T4R3(\phi, f_i)}{T5R3(\phi, f_i)}\right)\left(\frac{T5R4(\phi, f_i)}{T4R4(\phi, f_i)}\right) \quad i = 1,2, ..., N_f \tag{6}$$

where $g_d^{fi}(\phi)$ represent the gain compensated measurement quantities at frequencies $i = 1,2, ... , N_f$ (e.g., $g_d^{f1}(\phi)$, $g_d^{f2}(\phi)$, and $g_d^{f3}(\phi)$ at corresponding first, second, and third frequencies).

According to the invention, the electromagnetic measurements at the plurality of frequencies are processed in combination to compute an apparent resistivity of the formation (i.e., an apparent resistivity obtained by combining the measurements made at the plurality of frequencies). The processing includes minimizing a sum of the differences between modelled measurements and the plurality of measurements made at the corresponding plurality of frequencies. The modelled measurements are computed using a model that assumes a homogeneous formation. For the above described gain compensated measurements at toolface angle $\phi$ the resistivity of the formation $R$ may be computed by minimizing the following cost function:

$$misfit(\phi) = \sum_{i=1}^{N_f} \left| g_m^{fi}(R) - g_d^{fi}(\phi) \right|^n \cdot w_i \qquad (7)$$

such that

$$Rapp(\phi) = \arg\min_R \left( \sum_{i=1}^{N_f} \left| g_m^{fi}(R) - g_d^{fi}(\phi) \right|^n \cdot w_i \right) \qquad (8)$$

where $g_m^{fi}(R)$ represent the modelled measurements (tool responses) at frequencies $i = 1,2, ..., N_f$ at a formation resistivity value $R$ and where $g_d^{fi}(\phi)$ is defined above in Equation 6. With further reference to Equations 7 and 8, $w_i$ is substantially any weighting factor or function that weights the different frequencies and $n > 0$ (e.g., 1 or 2). The individual frequencies do not necessarily have different weights, as $w_i$ may equal 1 in certain embodiments. In one mathematically simple embodiment (where $n = 1$ and $w_i = 1$), Equation 8 reduces to the following equation.

$$Rapp(\phi) = \arg\min_R \left( \sum_{i=1}^{N_f} \left| g_m^{fi}(R) - g_d^{fi}(\phi) \right| \right) \qquad (8b)$$

With continued reference to Equations 7 and 8, it will be understood that the value of $R$ that minimizes Equation 7 (i.e., minimizes $misfit(\phi)$) is taken to be the apparent formation resistivity at any particular tool face angle $Rapp(\phi)$ as given in Equation 8.

In some embodiments, the apparent resistivity at any particular toolface angle $Rapp(\phi)$ may be computed using the following mathematical equation:

$$Rapp(\phi) = \arg\min_R \left( \frac{\sum_{i=1}^{N_f} \left| g_m^{fi}(R) - g_d^{fi}(\phi) \right|^2 w_i^2}{\sum_{i=1}^{N_f} \left| g_d^{fi}(\phi) \right|^2 w_i^2} \right) \qquad (9)$$

where $g_m^{fi}(R)$ and $g_d^{fi}(\phi)$ are as defined above and $w_i$ represents a weighting function or factor that enables the contributions of the individual frequencies to be weighted. It will be understood that Equation 9 is similar to Equation 8 in that the value of $R$ that minimizes the expression is taken to be the apparent formation resistivity at any particular tool face angle $\phi$.

Based on Equations 8 and/or 9 the resistivity at the top and bottom of the hole may be given as $Rapp_{top} = Rapp(\phi = 0°)$ and $Rapp_{bottom} = Rapp(\phi = 180°)$. For a layered formation, the up and down resistivity values may also be defined based on the bedding azimuth angle (DANG) as $Rapp_{up} = Rapp(\phi = DANG)$ and $Rapp_{down} = Rapp(\phi = DANG + 180°)$.

With continued reference to Equations 8, 8b, and 9 it will be understood that $g_m^{fi}(R)$ (representing the modelled measurements) may include, for example, a modelled attenuation and/or a modelled phase shift measurement. The modelled measurement (response) may be obtained for example from Equation 3 or from a look-up table of precomputed responses stored in downhole memory (e.g., as represented by FIGS 5A and 5B). Likewise $g_d^{fi}(\phi)$ (representing the gain compensated measurement quantities) may include, for example, attenuation and/or phase shift measurements (e.g., as described above). The disclosed embodiments may advantageously combine a plurality of measurements (e.g., gain compensated measureents $g_d^{fi}(\phi)$) to obtain a combined apparent resistivity value of the formation. For example, in an embodiment in which measurements are made at three frequencies (such as 100 kHz, 400 kHz, and 2 MHz), six measurements (attenuation and phase shift at each frequency) may be combined into a single apparent resistivity value. Moreover, as described above there is no need to use computationally expensive inversion algorithms.

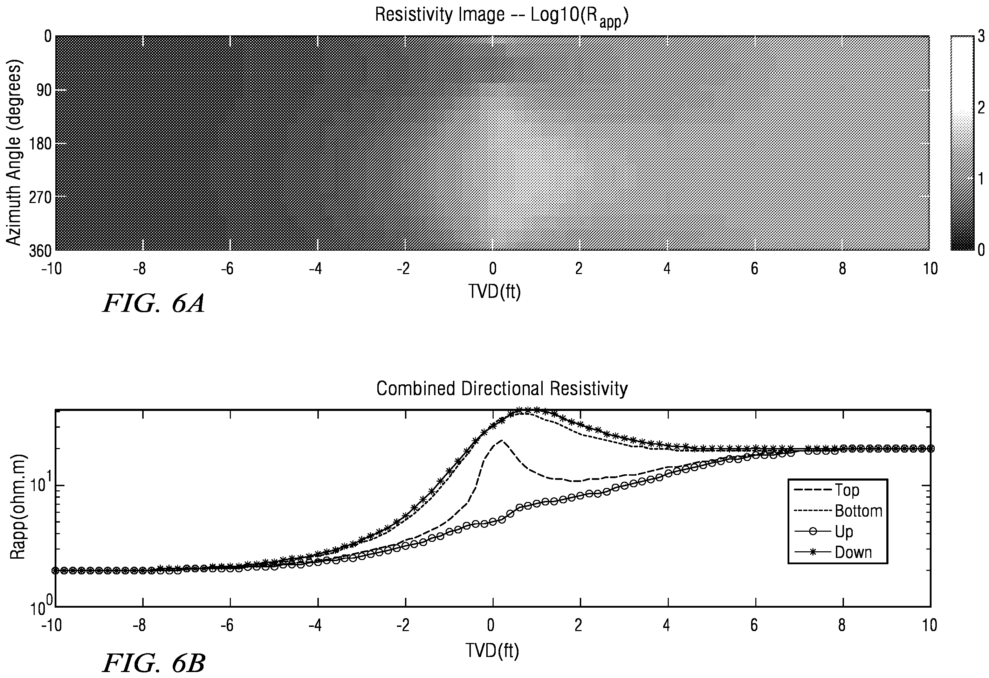

The following example further illustrates the disclosure but, of course, should not be construed as in any way limiting its scope. Apparent resistivity values were computed for a hypothetical well drilled at an inclination of 87 degrees through a bed boundary having a bedding azimuth angle of 50 degrees. The resistivity of the formation uphole of the boundary was 2 ohm·m while the resistivity of the formation downhole of the boundary was 20 ohm·m. FIG. 6A depicts a 16 bin (sector) resistivity image (6A) showing apparent resistivity values in pseudo-color versus azimuth angle and total vertical depth of the well. The apparent resistivity is asymmetric as expected. FIG. 6B depicts a plot of $Rapp_{top}$, $Rapp_{bottom}$, $Rapp_{up}$, and $Rapp_{down}$ versus vertical depth of the well. As depicted, the apparent resistivity values are approximately 2 ohm·m above the boundary and 20 ohm·m below the boundary (note that the boundary is located at $TVD$ = 0. Moreover, when the tool is close to the bed boundary, $Rapp_{bottom}$ and $Rapp_{down}$ give higher values than $Rapp_{top}$ and $Rapp_{up}$ indicating that the lower (downhole) portion of the formation is more resistive than the upper (uphole) portion.

In some embodiments, a portion of the disclosed electromagnetic logging method may be implemented on a on a downhole processor (controller). By downhole processor it is meant an electronic processor (e.g., a microprocessor or digital controller) deployed in the drill string (e.g., in the electromagnetic logging tool 50 or elsewhere in the bottom hole assembly). In such embodiments, the controller may be configured to cause the transceivers to transmit and receive electromagnetic waves at the plurality of frequencies, to compute the gain compensated measurement quantities, and to compute the combined apparent resistivity values from the electromagnetic measurements. In some embodiments, the combined apparent resistivity values are computed using a downhole controller deployed in the logging tool (e.g., tool 50 in FIG. 1). The disclosed embodiments advantageously enable such computations and require minimal processing power (e.g., as compared to conventional inversion algorithms).

The apparent resistivity values may be further stored in downhole memory and/or transmitted to the surface while drilling via known telemetry techniques (e.g., mud pulse telemetry or wired drill pipe). Whether stored in memory or transmitted to the surface, the computed apparent resistivity values may also be used in a geosteering operation to guide subsequent drilling of the wellbore.

As known to those of ordinary skill in the art, a suitable controller may include, for example, a programmable processor, such as a digital signal processor or other microprocessor or microcontroller and processor-readable or computer-readable program code embodying logic. A suitable processor may be utilized, for example, to execute the method embodiments (or various steps in the method embodiments) as described above. A suitable controller may also optionally include other controllable components, such as sensors (e.g., a toolface sensor), data storage devices, power supplies, timers, and the like. The controller may also be disposed to be in electronic communication with transmitter and receiver electronics in the electromagnetic logging tool. A suitable controller may also optionally communicate with other instruments in the drill string, such as, for example, telemetry systems that communicate with the surface or a controller in steering tool such as a rotary steerable tool in geosteering operations. A suitable controller may further optionally include volatile or non-volatile memory or a data storage device.

It should be noted and understood that improvements and modifications of the embodiments described above may be made, within the scope of the appended claims.

Additionally, it should be understood that references to "one embodiment" or "an embodiment" of the present disclosure are not intended to be interpreted as excluding the existence of additional embodiments that also incorporate the recited features. For example, any element described in relation to an embodiment herein may be combinable with any element of any other embodiment described herein. Numbers, percentages, ratios, or other values stated herein are intended to include that value, and also other values that are "about" or "approximately" the stated value, as would be appreciated by one of ordinary skill in the art encompassed by embodiments of the present disclosure. Terms such as up, down, top and bottom, and other like terms should be understood to be relative positions to a given point and may be utilized to more clearly describe some features. Commonly, these terms relate to a reference point such as the surface from which drilling operations are initiated.

The terms "approximately," "about," and "substantially" as used herein represent an amount close to the stated amount that is within standard manufacturing or process tolerances, or which still performs a desired function or achieves a desired result. For example, the terms "approximately," "about," and "substantially" may refer to an amount that is within less than 5% of, within less than 1% of, within less than 0.1% of, or within less than 0.01% of a stated amount. Further, it should be understood that any directions or reference frames in the preceding description are merely relative directions or movements. For example, any references to "up" and "down" or "above" or "below" are merely descriptive of the relative position or movement of the related elements.

The described embodiments are to be considered as illustrative and not restrictive. The scope of the invention is defined by the appended claims.

**Claims**

1. A method (100) for making electromagnetic directional resistivity measurements of a subterranean formation, the method comprising:

   (a) rotating (102) an electromagnetic logging tool (50) in a subterranean wellbore penetrating the formation, the logging tool (50) including a transmitting antenna (52, 54, 56, 58, 60, 62; TI, T2, T3, T4, T5, T6) and a receiving antenna (52, 54, 56, 58, 60, 62; R1, R2, R3, R4) spaced along a tool body (51), at least one of the transmitting antenna (52, 54, 56, 58, 60, 62) and the receiving antenna (64, 66, 68, 69) being a tilted antenna;
   (b) causing (104) the electromagnetic logging tool (50) to make a plurality of electromagnetic measurements at a corresponding plurality of frequencies while rotating in (a); and
   (c) processing (108) the plurality of measurements made at the corresponding plurality of frequencies in (b) to compute a combined apparent resistivity of the subterranean formation, wherein the processing includes minimizing a difference between a plurality of modeled measurements and the plurality of measurements made in (b), the modeled measurements being computed using a model assuming a homogenous formation.

2. The method of claim 1, wherein the processing includes minimizing a sum of the differences between the modelled measurements and the plurality of measurements made at the corresponding plurality of frequencies.

3. The method of claim 2, wherein step (c) further comprises:

   (c1) processing a plurality of measurements at each of the plurality of frequencies to compute a gain compensated measurement quantity at each frequency; and
   (c2) processing the plurality of gain compensated measurement quantities obtained in (c1) to compute the combined apparent resistivity of the subterranean formation, wherein the processing includes minimizing a sum of the differences between modelled gain compensated measurements and the plurality of gain compensated measurements computed in (c1).

4. The method of claim 3, wherein the combined apparent resistivity $Rapp(\phi)$ is computed in (c2) using at least one of the following mathematical equations:

$$Rapp(\phi) = \arg\min_{R}\left(\sum_{i=1}^{N_f}\left|g_m^{fi}(R) - g_d^{fi}(\phi)\right|\right);$$

$$Rapp(\phi) = \arg\min_{R}\left(\sum_{i=1}^{N_f}\left|g_m^{fi}(R) - g_d^{fi}(\phi)\right|^{n} \cdot w_i\right);$$

$$Rapp(\phi) = \arg\min_{R}\left(\frac{\sum_{i=1}^{N_f}\left|g_m^{fi}(R) - g_d^{fi}(\phi)\right|^{2} w_i{}^2}{\sum_{i=1}^{N_f}\left|g_d^{fi}(\phi)\right|^{2} w_i{}^2}\right);$$

wherein $g_m^{fi}(R)$ represent the modelled measurements and $g_d^{fi}(\phi)$ represent the gain compensated measurement quantities at frequencies $i$ = 1,2, ..., $N_f$, $\phi$ represents the toolface angle, $w_i$ represents a weighting factor or function, and $n$ > 0.

5. The method of claim 2, wherein step (c) further comprises:

   (c1) processing the plurality of measurements made at the corresponding plurality of frequencies in (b) to compute a plurality of combined apparent resistivity values at a corresponding plurality of discrete toolface angles; and

(c2) processing the plurality of combined apparent resistivity values to generate an image depicting the plurality of combined apparent resistivity values versus toolface angle and measured depth of the wellbore.

6. The method of claim 1, further comprising:
   (d) evaluating (110) the combined apparent resistivity computed in (c) to control a direction of drilling of the subterranean wellbore.

7. The method of claim 1, wherein the combined apparent resistivity of the subterranean formation is computed in (c) using a downhole processor deployed in the electromagnetic logging tool.

8. An electromagnetic logging while drilling tool (50) comprising:

   a logging while drilling tool body (51);
   at least one transmitting antenna (52, 54, 56, 58, 60, 62; Tl, T2, T3, T4, T5, T6) and at least one receiving antenna (64, 66, 68, 69; R1, R2, R3, R4) deployed on the tool body (51), wherein at least one of the transmitting antenna (52, 54, 56, 58, 60, 62) and the receiving antenna (64, 66, 68, 69) is a tilted antenna; and
   an electronic controller configured to perform steps (b) and (c) of the method of any of claims 2 to 7.

9. The tool of claim 8, wherein the controller is further configured to (iii) communicate with a controller in a steering tool to perform the method of claim 6.

10. The tool of claim 8, wherein the transmitting antenna comprises first and second axial transmitting antennas (72) and the receiving antenna comprises first and second tilted receiving antennas (74A, 74B).

11. The tool of claim 8, wherein the transmitting antenna comprises first and second tilted transmitting antennas (78) and the receiving antenna comprises first and second axial receiving antennas (80).

12. The tool of claim 8, wherein the transmitting antenna comprises first and second transverse transmitting antennas (86) and the receiving antenna comprises first and second tilted receiving antennas (88).

13. The tool of claim 8, wherein the transmitting antenna comprises first and second tilted transmitting antennas (82) and the receiving antenna comprises first and second transverse receiving antennas (84).

14. The tool of claim 8, wherein the transmitting antenna comprises first and second tilted transmitting antennas (90) and the receiving antenna comprises first and second tilted receiving antennas (92), wherein the transmitting antennas (90) have a different tilt angle than the receiving antennas (92).

**Patentansprüche**

1. Verfahren (100) zum Erstellen von elektromagnetischen gerichteten Widerstandsausmessungen einer unterirdischen Formation, das Verfahren umfassend:

   (a) Rotieren (102) eines elektromagnetischen Messwerkzeugs (50) in einer unterirdischen Bohrung, die die Formation durchdringt, wobei das Messwerkzeug (50) eine Sendeantenne (52, 54, 56, 58, 60, 62; T1, T2, T3, T4, T5, T6) und eine Empfangsantenne (52, 54, 56, 58, 60, 62; R1, R2, R3, R4), die entlang eines Werkzeugkörpers (51) beabstandet sind, einschließt, wobei mindestens eine der Sendeantenne (52, 54, 56, 58, 60, 62) und der Empfangsantenne (64, 66, 68, 69) eine geneigte Antenne ist;
   (b) Veranlassen (104) des elektromagnetischen Messwerkzeugs (50), eine Vielzahl von elektromagnetischen Ausmessungen bei einer entsprechenden Vielzahl von Frequenzen zu erstellen, während dieses in (a) rotiert; und
   (c) Verarbeiten (108) der Vielzahl von Ausmessungen, die bei der entsprechenden Vielzahl von Frequenzen in (b) erstellt werden, um einen kombinierten scheinbaren Widerstand der unterirdischen Formation zu berechnen, wobei das Verarbeiten ein Minimieren einer Differenz zwischen einer Vielzahl von modellierten Ausmessungen und der Vielzahl von Ausmessungen, die in (b) erstellt werden, einschließt, wobei die modellierten Ausmessungen unter Verwendung eines Modells berechnet werden, das eine homogene Formation annimmt.

2. Verfahren nach Anspruch 1, wobei das Verarbeiten das Minimieren einer Summe der Differenzen zwischen den modellierten Ausmessungen und der Vielzahl von Ausmessungen, die bei der entsprechenden Vielzahl von Frequenzen erstellt werden, einschließt.

3.  Verfahren nach Anspruch 2, wobei Schritt (c) ferner umfasst:

(c1) Verarbeiten einer Vielzahl von Ausmessungen bei jeder der Vielzahl von Frequenzen, um eine verstärkungskompensierte Ausmessungsgröße bei jeder Frequenz zu berechnen; und
(c2) Verarbeiten der Vielzahl von verstärkungskompensierten Ausmessungsgrößen, die in (c1) erhalten werden, um den kombinierten scheinbaren Widerstand der unterirdischen Formation zu berechnen, wobei das Verarbeiten das Minimieren einer Summe der Differenzen zwischen den modellierten verstärkungskompensierten Ausmessungen und der Vielzahl von verstärkungskompensierten Ausmessungen, die in (c1) berechnet werden, einschließt.

4.  Verfahren nach Anspruch 3, wobei der kombinierte scheinbare Widerstand $Rapp(\phi)$ in (c2) unter Verwendung mindestens einer der folgenden mathematischen Gleichungen berechnet wird:

$$Rapp(\phi) = \arg\min_{R}\left(\sum_{i=1}^{N_f}\left|g_m^{fi}(R) - g_d^{fi}(\phi)\right|\right);$$

$$Rapp(\phi) = \arg\min_{R}\left(\sum_{i=1}^{N_f}\left|g_m^{fi}(R) - g_d^{fi}(\phi)\right|^n \cdot w_i\right);$$

$$Rapp(\phi) = \arg\min_{R}\left(\frac{\sum_{i=1}^{N_f}\left|g_m^{fi}(R) - g_d^{fi}(\phi)\right|^2 w_i^2}{\sum_{i=1}^{N_f}\left|g_d^{fi}(\phi)\right|^2 w_i^2}\right);$$

wobei $g_m^{fi}(R)$ die modellierten Ausmessungen darstellen und $g_d^{fi}(\phi)$ die verstärkungskompensierten Ausmessungsgrößen bei den Frequenzen $i = 1, 2, ..., N_f$ darstellen, $\phi$ den Werkzeugflächenwinkel darstellt, $w_i$ einen Gewichtungsfaktor oder eine Gewichtungsfunktion darstellt und $n > 0$.

5.  Verfahren nach Anspruch 2, wobei Schritt (c) ferner umfasst:

(c1) Verarbeiten der Vielzahl von Ausmessungen, die bei der entsprechenden Vielzahl von Frequenzen in (b) erstellt werden, um eine Vielzahl von kombinierten scheinbaren Widerstandswerten bei einer entsprechenden Vielzahl von diskreten Werkzeugflächenwinkeln zu berechnen; und
(c2) Verarbeiten der Vielzahl von kombinierten scheinbaren Widerstandswerten, um ein Bild zu erzeugen, das die Vielzahl von kombinierten scheinbaren Widerstandswerten gegenüber dem Werkzeugflächenwinkel und einer ausgemessenen Tiefe der Bohrung aufzeigt.

6.  Verfahren nach Anspruch 1, ferner umfassend:
(d) Auswerten (110) des kombinierten scheinbaren Widerstands, der in (c) berechnet wird, um eine Bohrrichtung der unterirdischen Bohrung zu steuern.

7.  Verfahren nach Anspruch 1, wobei der kombinierte scheinbare Widerstand der unterirdischen Formation in (c) unter Verwendung eines Untertageprozessors berechnet wird, der in dem elektromagnetischen Messwerkzeug angewendet wird.

8.  Elektromagnetisches Werkzeug (50) zum Messen während des Bohrens, umfassend:

einen Körper (51) des Werkzeugs zum Messen während des Bohrens;

mindestens eine Sendeantenne (52, 54, 56, 58, 60, 62; T1, T2, T3, T4, T5, T6) und mindestens eine Empfangsantenne (64, 66, 68, 69; R1, R2, R3, R4), die an dem Werkzeugkörper (51) angewendet werden, wobei mindestens eine der Sendeantenne (52, 54, 56, 58, 60, 62) und der Empfangsantenne (64, 66, 68, 69) eine geneigte Antenne ist; und

eine elektronische Steuerung, die konfiguriert ist, um die Schritte (b) und (c) des Verfahrens nach einem der Ansprüche 2 bis 7 durchzuführen.

**9.** Werkzeug nach Anspruch 8, wobei die Steuerung ferner konfiguriert ist, um (iii) mit einer Steuerung in einem Lenkwerkzeug zu kommunizieren, um das Verfahren nach Anspruch 6 durchzuführen.

**10.** Werkzeug nach Anspruch 8, wobei die Sendeantenne eine erste und eine zweite axiale Sendeantenne (72) umfasst und die Empfangsantenne eine erste und eine zweite geneigte Empfangsantenne (74A, 74B) umfasst.

**11.** Werkzeug nach Anspruch 8, wobei die Sendeantenne eine erste und eine zweite geneigte Sendeantenne (78) umfasst und die Empfangsantenne eine erste und eine zweite axiale Empfangsantenne (80) umfasst.

**12.** Werkzeug nach Anspruch 8, wobei die Sendeantenne eine erste und eine zweite transversale Sendeantenne (86) umfasst und die Empfangsantenne eine erste und eine zweite geneigte Empfangsantenne (88) umfasst.

**13.** Werkzeug nach Anspruch 8, wobei die Sendeantenne eine erste und eine zweite geneigte Sendeantenne (82) umfasst und die Empfangsantenne eine erste und eine zweite transversale Empfangsantenne (84) umfasst.

**14.** Werkzeug nach Anspruch 8, wobei die Sendeantenne eine erste und eine zweite geneigte Sendeantenne (90) umfasst und die Empfangsantenne eine erste und eine zweite geneigte Empfangsantenne (92) umfasst, wobei die Sendeantennen (90) einen anderen Neigungswinkel als die Empfangsantennen (92) aufweisen.

## Revendications

**1.** Procédé (100) permettant d'effectuer des mesures de résistivité électromagnétiques directionnelles d'une formation souterraine, le procédé comprenant :

(a) la rotation (102) d'un outil de diagraphie (50) électromagnétique dans un puits de forage souterrain pénétrant dans la formation, l'outil de diagraphie (50) comportant une antenne d'émission (52, 54, 56, 58, 60, 62 ; T1, T2, T3, T4, T5, T6) et une antenne de réception (52, 54, 56, 58, 60, 62 ; R1, R2, R3, R4) espacée le long d'un corps d'outil (51), au moins l'une parmi l'antenne d'émission (52, 54, 56, 58, 60, 62) et l'antenne de réception (64, 66, 68, 69) étant une antenne inclinée ;

(b) le fait d'amener (104) l'outil de diagraphie (50) électromagnétique à effectuer une pluralité de mesures électromagnétiques à une pluralité correspondante de fréquences tout en tournant à l'étape (a) ; et

(c) le traitement (108) de la pluralité de mesures effectuées à la pluralité correspondante de fréquences à l'étape (b) pour calculer une résistivité apparente combinée de la formation souterraine, dans lequel le traitement comporte la réduction au minimum d'une différence entre une pluralité de mesures modélisées et la pluralité de mesures effectuées à l'étape (b), les mesures modélisées étant calculées à l'aide d'un modèle supposant une formation homogène.

**2.** Procédé selon la revendication 1, dans lequel le traitement comporte la réduction au minimum d'une somme des différences entre les mesures modélisées et la pluralité de mesures effectuées à la pluralité correspondante de fréquences.

**3.** Procédé selon la revendication 2, dans lequel l'étape (c) comprend en outre :

(c1) le traitement d'une pluralité de mesures à chacune de la pluralité de fréquences pour calculer une grandeur de mesure à compensation de gain à chaque fréquence ; et

(c2) le traitement de la pluralité de grandeurs de mesure à compensation de gain obtenues à l'étape (c1) pour calculer la résistivité apparente combinée de la formation souterraine, dans lequel le traitement comporte la réduction au minimum d'une somme des différences entre les mesures à compensation de gain modélisées et la pluralité de mesures à compensation de gain calculées à l'étape (c1).

4. Procédé selon la revendication 3, dans lequel la résistivité apparente combinée *Rapp(ϕ)* est calculée à l'étape (c2) à l'aide d'au moins l'une des équations mathématiques suivantes :

$$Rapp(\phi) = \arg\min_{R}\left(\sum_{i=1}^{N_f}\left|g_m^{fi}(R) - g_d^{fi}(\phi)\right|\right);$$

$$Rapp(\phi) = \arg\min_{R}\left(\sum_{i=1}^{N_f}\left|g_m^{fi}(R) - g_d^{fi}(\phi)\right|^n \cdot w_i\right);$$

$$Rapp(\phi) = \arg\min_{R}\left(\frac{\sum_{i=1}^{N_f}\left|g_m^{fi}(R) - g_d^{fi}(\phi)\right|^2 w_i^2}{\sum_{i=1}^{N_f}\left|g_d^{fi}(\phi)\right|^2 w_i^2}\right);$$

où $g_m^{fi}(R)$ représentent les mesures modélisées et $g_d^{fi}(\phi)$ représentent les grandeurs de mesure à compensation de gain aux fréquences $i$ = 1,2, ... , $N_f$, $\phi$ représente l'angle de face de coupe, $w_i$ représente un facteur ou une fonction de pondération, et $n$ > 0.

5. Procédé selon la revendication 2, dans lequel l'étape (c) comprend en outre :

   (c1) le traitement de la pluralité de mesures effectuées à la pluralité correspondante de fréquences à l'étape (b) pour calculer une pluralité de valeurs de résistivité apparente combinée à une pluralité correspondante d'angles de face de coupe distincts ; et
   (c2) le traitement de la pluralité de valeurs de résistivité apparente combinée pour générer une image représentant la pluralité de valeurs de résistivité apparente combinée en fonction de l'angle de face de coupe et de la profondeur mesurée du puits de forage.

6. Procédé selon la revendication 1, comprenant en outre :
   (d) l'évaluation (110) de la résistivité apparente combinée calculée à l'étape (c) pour commander une direction de forage du puits de forage souterrain.

7. Procédé selon la revendication 1, dans lequel la résistivité apparente combinée de la formation souterraine est calculée à l'étape (c) à l'aide d'un processeur fond de trou déployé dans l'outil de diagraphie électromagnétique.

8. Outil de diagraphie (50) électromagnétique pendant le forage, comprenant :

   un corps d'outil (51) de diagraphie pendant le forage ;
   au moins une antenne d'émission (52, 54, 56, 58, 60, 62 ; T1, T2, T3, T4, T5, T6) et au moins une antenne de réception (64, 66, 68, 69 ; R1, R2, R3, R4) déployée sur le corps d'outil (51), dans lequel au moins l'une parmi l'antenne d'émission (52, 54, 56, 58, 60, 62) et l'antenne de réception (64, 66, 68, 69) est une antenne inclinée ; et
   un dispositif de commande électronique configuré pour exécuter les étapes (b) et (c) du procédé selon l'une quelconque des revendications 2 à 7.

9. Outil selon la revendication 8, dans lequel le dispositif de commande est en outre configuré pour (iii) communiquer avec un dispositif de commande dans un outil de direction pour mettre en œuvre le procédé selon la revendication 6.

10. Outil selon la revendication 8, dans lequel l'antenne d'émission comprend des première et seconde antennes d'émission axiales (72) et l'antenne de réception comprend de première et seconde antennes de réception inclinées (74A, 74B).

**11.** Outil selon la revendication 8, dans lequel l'antenne d'émission comprend des première et seconde antennes d'émission inclinées (78) et l'antenne de réception comprend de première et seconde antennes de réception axiales (80).

**12.** Outil selon la revendication 8, dans lequel l'antenne d'émission comprend des première et seconde antennes d'émission transversales (86) et l'antenne de réception comprend de première et seconde antennes de réception inclinées (88).

**13.** Outil selon la revendication 8, dans lequel l'antenne d'émission comprend des première et seconde antennes d'émission inclinées (82) et l'antenne de réception comprend de première et seconde antennes de réception transversales (84).

**14.** Outil selon la revendication 8, dans lequel l'antenne d'émission comprend des première et seconde antennes d'émission inclinées (90) et l'antenne de réception comprend de première et seconde antennes de réception inclinées (92), dans lequel les antennes d'émission (90) présentent un angle d'inclinaison différent de celui des antennes de réception (92).

*FIG. 1*

*FIG. 2*

*FIG. 3A*

*FIG. 3B*

*FIG. 3C*

*FIG. 3D*

*FIG. 3E*

*FIG. 3F*

FIG. 4

102 — ROTATE EM LOGGING TOOL IN WELLBORE

100

104 — MAKE EM LOGGING MEASUREMENTS AT A PLURALITY OF EM FREQUENCIES

106 — PROCESS EM LOGGING MEASUREMENTS TO COMPUTE GAIN COMPENSATED QUANTITIES

108 — PROCESS EM LOGGING MEASUREMENTS OR GAIN COMPENSATED QUANTITIES TO COMPUTE APPARENT RESISTIVITY OF FORMATION

110 — EVALUATE APPARENT RESISTIVITY TO CONTROL A DIRECTION OF DRILLING

FIG. 5A

FIG. 5B

FIG. 6A

Resistivity Image -- Log10($R_{app}$)

FIG. 6B

Combined Directional Resistivity

**EP 4 244 660 B1**

## REFERENCES CITED IN THE DESCRIPTION

**Patent documents cited in the description**

- US 2018003853 A1
- US 20110074427 A
- US 20110238312 A
- US 9423525 B
- US 9835755 B